# EUROPEAN PATENT SPECIFICATION

(11) **EP 3 599 700 B1**
(45) Date of publication and mention of the grant of the patent: **30.12.2020**
(21) Application number: 18185532.1
(22) Date of filing: 25.07.2018
(51) Int. Cl.: H02J 50/12, H02M 1/32, H02M 7/219

(54) **SAFE OPERATION IN WIRELESS POWER TRANSMISSION SYSTEMS**
SICHERER BETRIEB IN DRAHTLOSEN LEISTUNGSÜBERTRAGUNGSSYSTEMEN
FONCTIONNEMENT SÛR DANS DES SYSTÈMES DE TRANSMISSION DE PUISSANCE SANS FIL

(43) Date of publication of application: 29.01.2020
(73) Proprietor: Wiferion GmbH, 79111 Freiburg (DE)
(72) Inventor: Tritschler, Johannes, 79115 Freiburg (DE); Goeldi, Benriah, 79100 Freiburg (DE)
(74) Representative: Köllner, Malte

(56) References cited:
- US-A1- 2011 254 379
- US-A1- 2015 001 956
- US-A1- 2015 274 023

## Description

### FIELD OF INVENTION

The present invention relates to the safe operation of wireless power transmission systems, and in particular to a mobile side circuit of a wireless power transmission system wherein the circuit topology in a mobile side rectifier is dynamically configurable upon occurrence of a failure state in the mobile side circuit, further to a wireless power transmission system using the mobile side circuit, and to related methods of operation for the mobile side circuit and the wireless power transmission system.

### TECHNICAL BACKGROUND

Wireless power transmission systems, also referred to as inductive power transmission systems have huge advantages over cable connected systems. Due to technological advancements, wireless power transmission systems used for, e.g., charging of mobile batteries gain more and more attention.

In general, wireless power transmission systems consist of a stationary side circuit and a mobile side circuit. The stationary side circuit has a switched mode electronic circuit acting as a stationary excitation unit for stationary side resonant circuit consisting of at least one capacitor and a transmission coil. At the mobile side circuit, a voltage and current are induced in a mobile side resonant circuit. A passive or active rectifier feeds directly a battery or a mobile energy system which consists of several loads, e.g., DC/DC-converter and energy storage devices like batteries, Supercaps, and/or Ultracaps.

Further, patent document US 2015/001956 A1 discloses a wireless power receiving device, and wireless power transmission device capable of improving the reliability of a protection circuit while preventing breakage of a circuit element upon occurrence of any abnormality, such as overvoltage or overcurrent. A wireless power receiving device includes a power receiving coil; a rectifier unit that performs full-wave rectification of the power received by the power receiving coil and supplies the power to a load; power-receiving-side detecting unit that detects an output voltage value or an output current value from the rectifier unit; and switching unit that short-circuits one of two current paths through the rectifier unit if the value detected by the power-receiving-side detecting unit exceeds a predetermined reference value.

Also, patent document US 2015/274023 A1 describes a contactless charging system for charging a motor vehicle battery including a primary induction circuit outside the motor vehicle powered by an electric power network, a secondary induction circuit installed on the motor vehicle and coupled to the battery via a rectifier bridge, a controlled switch mechanism configured to put the secondary induction circuit into short circuit without putting the battery into short circuit when there is an electrical malfunction on board the motor vehicle, and a controller configured to cut off power to the primary induction circuit when detecting a short circuit in the secondary induction circuit.

Finally, patent document US 2011/254379 A1 describes a bi-directional inductive power transfer. A method, apparatus, and system are provided which enables the control of contactless power transfer in an inductive power transfer system using a phase control technique. The method comprises adjusting the phase of a secondary-side converter output voltage with respect to that of a primary-side converter. The magnitude of power transfer is determined by the relative phase angle, and the direction of power transfer is determined by whether the secondary converter output voltage leads or lags the input converter voltage, thereby enabling bi-directional power transfer between the primary and secondary sides of the system. According to alternative embodiments, the method may also be used for uni-directional power transfer only, and/or the secondary converter may be operated to maintain a constant relative phase angle.

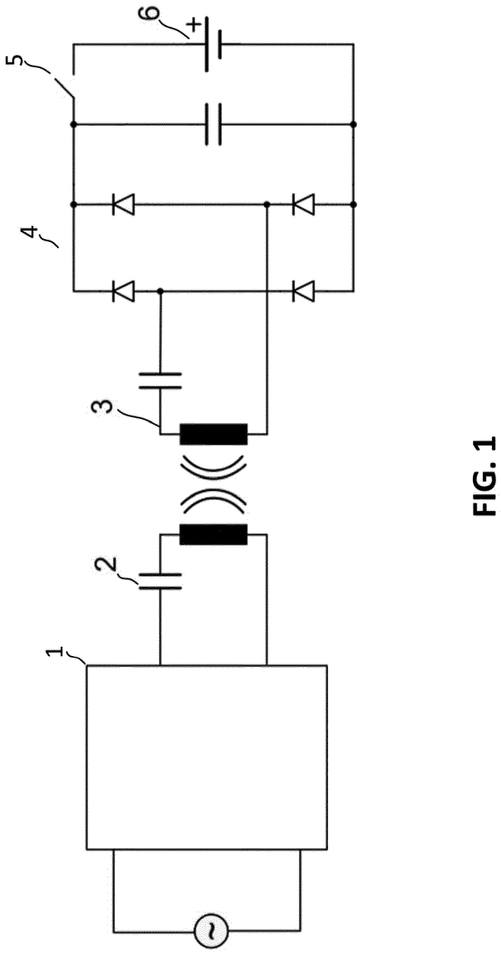

Fig. 1 shows a schematic diagram of a further wireless power transmission system using series-series compensation as known in the art.

As shown in Fig. 1, a series-series compensation technique may be used in a wireless power transmission system. For the stationary side circuit there is provided a stationary excitation unit 1 which feeds the stationary side resonant circuit 2. In the mobile side circuit, a bridge rectifier 4 converts the received AC-Signals output by the mobile side resonant circuit 3 into DC output voltages and currents. The output of the rectifier 4 is connected in parallel to a smoothing capacitor and a load 6 which may be a battery or any other consumer or storage device. In general, there is provided a switching element 5 to protect the load 6 upon occurrence of a failure sate in the mobile side circuit.

However, an opening of the switching element 5 or any other event which leads to an open circuit on the mobile side circuit can lead to over-voltages at the output of the mobile side resonant circuit as the stationary power supply still continues to feed the mobile side resonant circuit with energy. This can lead to damaging the mobile side electronics. To avoid damage to the mobile side electronics the mobile side circuit needs to be protected without time delay upon occurrence of a mobile side failure state.

To solve this problem, in US-A-6,037,745 it is proposed to short-circuit the mobile side resonant circuit without shorting the mobile side battery or energy storage device. For series-series compensation topologies this can be seen as state of the art. However, shorting the mobile side resonant circuit interrupts the power supply to the battery but does not interrupt the current in the mobile side resonant circuit. In view of this in EP 2 903 852 B1 it is suggested to short circuit the mobile side resonant circuit and to detect the short circuit on the stationary side for interruption of power supply from the stationary side resonant circuit.

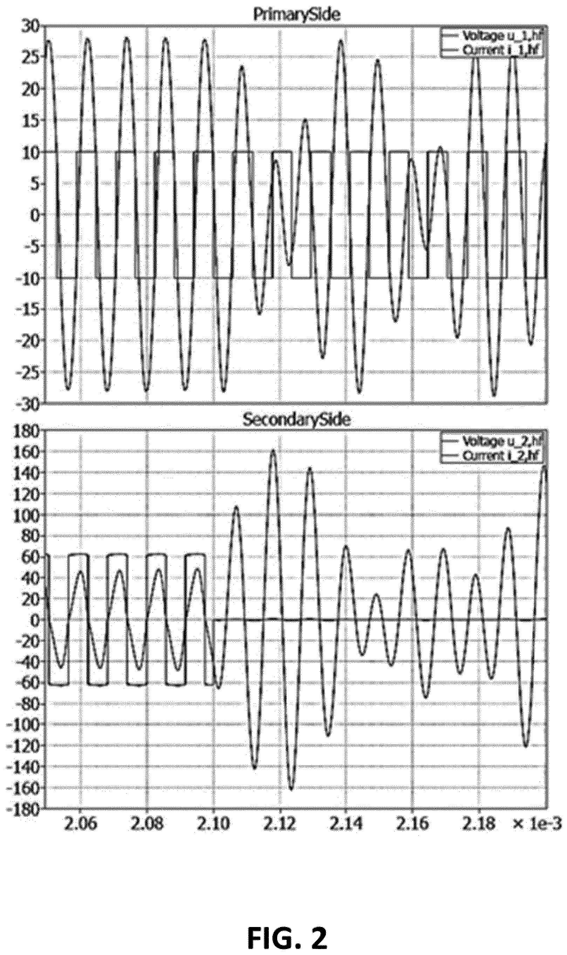

Fig. 2 shows voltage and current waveforms after establishing a short circuit of the mobile side resonant circuit of the mobile side circuit for a series-series-compensated inductive power transmission system.

As shown in Fig. 2, shorting the mobile side resonant circuit as described above leads to a sudden very hard step response of the mobile side resonant circuit and thus to very high currents and extremely high voltage peaks in the power transmission coils as well as in the resonant capacitors. This can lead to isolation failures in these parts or to a damage or a degrading of the short-circuit switches due to the high currents.

As also shown in Fig. 2, the sudden voltage step generates extremely high currents which reach nearly four times the initial steady state current. This leads to very high voltages in the transmission coils as well as in the resonant capacitors. On the other side the shorting MOSFET circuits are confronted with very high current stresses.

### SUMMARY OF INVENTION

In view of the above the object of the invention is to ensure a safe operation of the wireless power transmission system while effectively avoiding damage to the mobile side circuitry upon occurrence of a failure state at the mobile side.

According to a first aspect of the present invention this object is achieved by a mobile side circuit of a wireless power transmission system having the features of claim 1 or 2.

According to a second aspect of the present invention this object is achieved by a wireless power transmission system according to claim 6 comprising a mobile side circuit according to claim 1 or 2. The wireless power transmission system further comprises a stationary side excitation unit adapted to excite a stationary side resonant circuit for wireless power transmission to the mobile side circuit and a stationary side controller. The stationary side controller is adapted to control operation of the stationary excitation unit, monitor power transfer to the mobile side circuit, and to interrupt wireless power transmission when a change in an amount of power transmitted to the mobile side circuit exceeds a predetermined threshold.

According to a third aspect of the present invention this object is achieved by a method of operating a mobile side circuit according to claim 1 comprising the steps of claim 9.

According to a fourth aspect of the present invention this object is achieved by a method of operating a wireless power transmission system according to claim 2 comprising the steps of claim 10.

### BRIEF DESCRIPTION OF DRAWING

In the following embodiments of the present invention will be described with reference to the drawing in which:
- Fig. 1: shows a schematic diagram of a wireless power transmission system using seriesseries compensation as known in the art;
- Fig. 2: shows voltage and current waveforms after establishing a short circuit of the mobile side resonant circuit of the mobile side circuit for a series-seriescompensated inductive power transmission system;
- Fig. 3: shows a schematic diagram of a wireless power transmission system using seriesseries compensation according to the present invention;
- Fig. 4: shows a flowchart of operation for the mobile side circuit of the wireless power transmission system according to the present invention;
- Fig. 5: shows a flowchart of operation for the stationary side circuit of the wireless power transmission system according to the present invention;
- Fig. 6: shows a first example for change of the operative mode of the mobile side rectifier from a full-bridge mode to a half-bridge mode and vice versa according to a first example explained for a better understanding of the present invention;
- Fig. 7: shows a second example for change of operative mode of the mobile side rectifier from a full-bridge mode to a half-bridge mode and vice versa according to the first example explained for a better understanding of the present invention;
- Fig. 8: shows a third example for change of operative mode of the mobile side rectifier from a full-bridge mode to a half-bridge mode and vice versa according to the first example explained for a better understanding of the present invention;
- Fig. 9: shows a fourth example for change of operative mode of the mobile side rectifier from a full-bridge mode to a half-bridge mode and vice versa according to the first example explained for a better understanding of the present invention;
- Fig. 10: shows a signal diagram of voltage and current at the stationary side circuit and the mobile side circuit upon change of operative mode of the mobile side rectifier from a full-bridge mode to a half-bridge mode and vice versa according to the first example explained for a better understanding of the present invention;
- Fig. 11: shows a signal diagram of voltage and current at the stationary side circuit and the mobile side circuit upon change of operative mode of the mobile side rectifier from a half-bridge mode to a full-bridge mode and vice versa according to the first example explained for a better understanding of the present invention;
- Fig. 12: shows a first example for change of the operative mode of the mobile side rectifier from a full-bridge mode to a DC mode a without polarity reversion and vice versa according to a first embodiment of the present invention;
- Fig. 13: shows an equivalent schematic diagram for the change of the operative mode of the mobile side rectifier from a full-bridge mode to a DC mode without polarity reversion as shown in Fig. 12;
- Fig. 14: shows a second example for change of the operative mode of the mobile side rectifier from a full-bridge mode to a DC mode a with polarity reversion and vice versa according to the first embodiment of the present invention;
- Fig. 15: shows an equivalent schematic diagram for the for change of the operative mode of the mobile side rectifier from a full-bridge mode to a DC mode with polarity reversion as shown in Fig. 14;
- Fig. 16: shows an example for change of the operative mode of the mobile side rectifier from a full-bridge mode to an antiphase mode and vice versa according to a second embodiment of the present invention;
- Fig. 17: shows an equivalent schematic diagram for the for change of the operative mode of the mobile side rectifier from a full-bridge mode to the antiphase mode as shown in Fig. 16 for a negative cycle of the input current to the mobile side rectifier;
- Fig. 18: shows an equivalent schematic diagram for the for change of the operative mode of the mobile side rectifier from a full-bridge mode to the antiphase mode as shown in Fig. 16 for a positive cycle of the input current to the mobile side rectifier; and
- Fig. 19: shows an example change of the operative mode of the mobile side rectifier from a half-bridge mode to the DC mode without polarity reversal and vice versa upon occurrence of a failure at the mobile side according to a second example explained for a better understanding of the present invention.

### DETAILED DESCRIPTION

In the following the present invention will be explained in detail with reference to the drawing. Here, it should be understood that such explanation is related to examples of the present invention only and not binding to the scope of the present invention as defined by the claims. As far as reference is made to specific circuit components this is to be considered as example for the underlying functionality such the circuit components are clearly exchangeable as long as the same functionality is achieved.

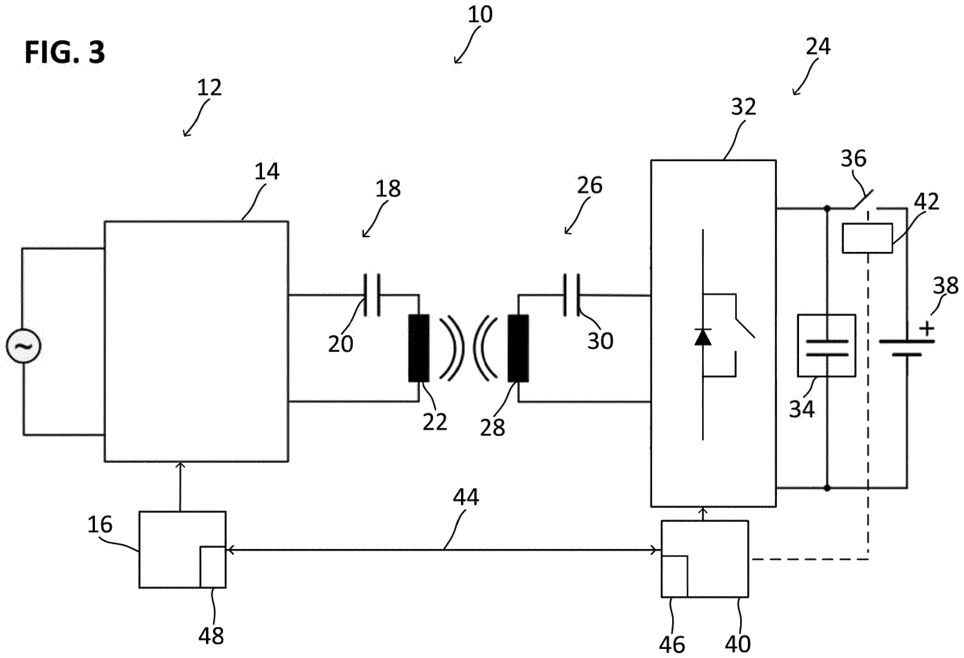

Fig. 3 shows a schematic diagram of a wireless power transmission system 10 using series-series compensation according to the present invention.

As shown in Fig. 3, the inductive power transfer system 10 has a stationary side circuit 12 comprising a stationary side DC/AC converter 14, a stationary side controller 16, and a stationary side resonant circuit 18 set up from with at least one stationary side capacitor 20 and at least one stationary side transmitter coil 22.

Operatively, the stationary side DC/AC converter 14 is adapted to excite the stationary side resonant circuit 18 for generation of an oscillating magnetic field during wireless power transmission. Further, operatively the stationary side controller 16 is adapted to measure the stationary side high frequency current and optionally the stationary side high frequency voltage for control of the primary side DC/AC converter 14. Still further, operatively the stationary side controller 16 optionally is adapted to measure the amount of power transmitted wirelessly from the stationary side circuit 12 to a mobile side circuit 24 of the wireless power transmission system 10.

As shown in Fig. 3, the wireless power transfer system 10 also has at least one mobile side circuit 24 separated from the stationary side circuit 12.

As shown in Fig. 3, the mobile side circuit 24 comprises a mobile side resonant circuit 26 set up from at least one a receiver coil 28 connected in series to at least one mobile side capacitor 30. The mobile side circuit 24 further comprises a mobile side rectifier 32. At the input the mobile side rectifier 32 is connected to the mobile side resonant circuit 26 and at the output the mobile side rectifier 32 is connected to an energy storage circuit 34. The energy storage circuit 34, e.g., a capacitor, is connected via a switch 36 to a load 38. The mobile side circuit 24 comprises a mobile side controller 40 adapted to control the mobile side rectifier 32.

As shown in Fig. 3, the mobile side circuit may also comprise a mobile side failure detector 42 adapted to detect occurrence of a failure state at the mobile side circuit 24 and coupled to the mobile side controller 40. Optionally, the mobile side controller 40 may comprise a mobile side communication interface 46 adapted to indicate the occurrence of a failure sate to the stationary side controller 16.

Operatively, the receiver coil 28, when placed in the magnetic field produced by the transmitter coil 22, receives energy transmitted by the transmitter coil 22 through inductive coupling. The inductive coupling leads to generation of a mobile side high frequency voltage and a mobile side high frequency current in the mobile side resonant circuit 26.

Operatively, the mobile side rectifier 32 is adapted to convert the mobile side high frequency voltage and the mobile side high frequency current into a mobile side rectified voltage under control of the mobile side controller 40 for subsequent smoothing by the energy storage circuit 34. Also, operatively the mobile side rectifier 32 outputs a mobile side direct current for supply to the load 38 across the switch 36.

Operatively, the mobile side controller 40 may be adapted to measure the mobile side high frequency current and to measure the mobile side high frequency voltage as input to the mobile side rectifier 32, as an option. Further, the mobile side controller 40 is adapted to measure the mobile side direct current and/or the mobile side DC voltage and to process generated measurement results for control of the mobile side rectifier 32.

As shown in Fig. 3, according to the present invention the provision of a wireless communication link 44 between the stationary side circuit 12 and the mobile side circuit 24 is an option. In this case, the stationary side controller 16 comprises a first communication interface 48 and the mobile side controller 40 comprises a second communication interface 46. It should be noted that according to the present invention there no restriction regarding the type of wireless communication implemented for the wireless communication link 44 which may rely, e.g., on the IrDa standard, or alternatively on Bluetooth WiFi, WLAN, etc.

Generally, very often rectifiers on the mobile side of a wireless power transmission system use full- or half-bridge rectifiers set up from at least two rectifying elements, e.g., diodes or active switching elements controlled by the mobile side controller 40 to implement the rectifying functionality.

In the most general sense according to the present invention it is suggest to provide the option to bypass or short circuit at least rectifying element in the mobile side rectifier 32 upon occurrence of a failure. As will be explained in more detail in the following this allows to change the operative mode of the mobile side rectifier 32 to one operative mode selected from a group comprising:
- a half-bridge mode;
- a full-bridge mode;
- a DC mode without polarity reversion where the voltage across the energy storage circuit 34 is switched through to the input side of the mobile side rectifier 32 without reversion of polarity of the voltage across the energy storage circuit 34;
- a DC mode with polarity reversion where the voltage across the energy storage circuit 34 is switched through to the input side of the mobile side rectifier 32 with reversion of polarity of the voltage across the energy storage circuit 34;
- an antiphase mode where the input voltage and the input current of the mobile side rectifier 32 are phase-shifted with respect to each other according to a predetermined range of phase-shift, e.g., by mapping the voltage across the energy storage circuit 34 to the input side of the mobile side rectifier while maintain voltage polarity when the current flowing through the mobile side resonant circuit 26 has negative polarity and by mapping the voltage across the energy storage circuit 34 to the input side of the mobile side rectifier while reversing voltage polarity when the current flowing through the mobile side resonant circuit 26 has positive polarity.

In the most general sense, the change of operation mode in the mobile side rectifier 32 changes the output power of the mobile side rectifier 32 to reduce the stress and avoid damage to the mobile side circuit. According to the present invention, this event can be detected on the stationary side to interrupt wireless power transmission from the stationary side circuit to the mobile side circuit.

An important advantage of the present invention is that the provision of a communication channel between the stationary side circuit and the mobile side circuit to communicate occurrence of a failure with time delays is not mandatory. To the contrary, the present invention enables immediate action by the mobile side circuit to handle an occurrence of a failure without time delay.

Further, while a person skilled in the art would suggest that making a short circuit of the secondary side resonant circuit 26 is safer than switching from a full-bridge mode to a half-bridge mode such understanding neglects that very high currents are generated during this switching event leading to a new sort of danger. The present invention overcomes this danger.

Further, according to the present invention current stresses in the mobile side rectifier 32 are significantly reduced upon occurrence of a failure due to the fact that the change in voltage is not as large as it is in the case of switching a hard short-circuit.

Further, it should be noted that according to the change of operative mode in the mobile side rectifier 32 is not restricted in any way and in to one direction only, as long as the operative mode during failure-free operation is different from the target operative mode of the mobile side rectifier 32 used upon occurrence of a failure at the mobile side circuit 24.

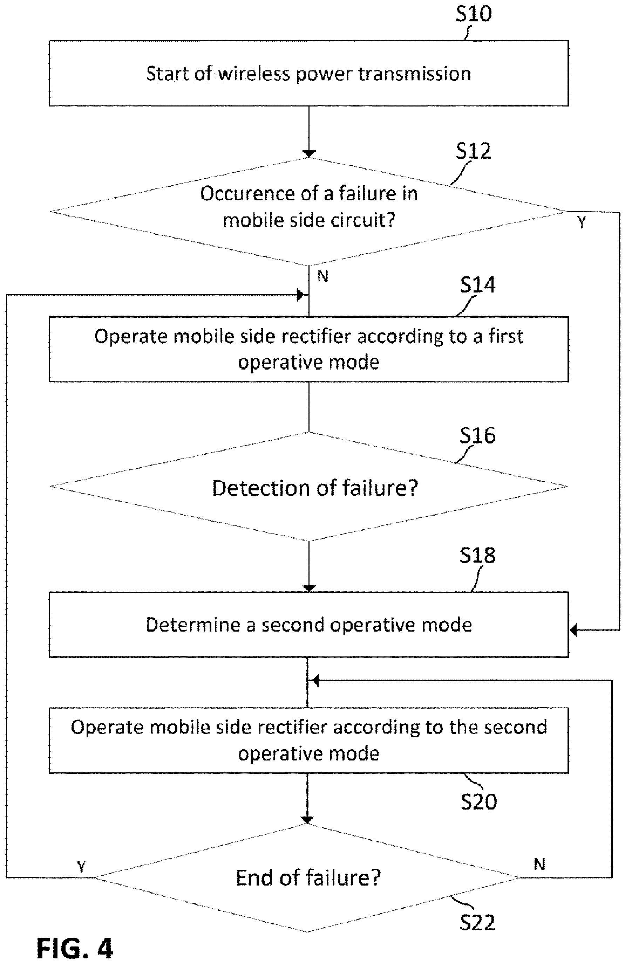

In the following different examples for realizing the basic concept of the present invention as outlined above will be explained with reference to Fig. 4 to Fig. 19.

Fig. 4 shows a flowchart of operation for the mobile side circuit of the wireless power transmission system according to the present invention.

As shown in Fig. 4, in a step S10, operatively executed by the stationary side circuit 12 under control of the stationary side controller 16 and by the mobile side circuit 24 under control of the mobile side controller 40, the wireless power transmission system 10 starts the wireless power transmission. At this stage, in a step S12, operatively executed by the mobile side failure detector 42 and the mobile side controller 40, it will be checked whether a failure occurs at the mobile side. If so, the failure handling procedure according to the present invention will start and otherwise the process flow proceeds according to standard procedure.

As shown in Fig. 4, in a step S14, operatively executed by the mobile side controller 40, there is determined a first operative mode for the mobile side rectifier 32 according to prevailing operative conditions, e.g., type of load 38, power consumption by the load 38, etc. Then the mobile side rectifier operates in the first operative mode being, a full bridge rectification mode during failure free operation of the mobile side circuit;

As shown in Fig. 4, in a step S16, operatively executed by the mobile side failure detector 42 and the mobile side controller 40, it will again be checked whether a failure sate occurs at the mobile side. Such a check may be implemented according to a predetermined interval, upon issuance of a related control signal, or any other suitable condition.

As shown in Fig. 4, if the result of step S16 is that a failure state occurs at the mobile side then there follows a step S18, operatively executed by the mobile side controller 40, to determine the second operative mode which is different from the first operative mode and is selected from a group comprising a DC mode where the voltage across the energy storage circuit 34 is switched through to the input of mobile side rectifier 32 with or without polarity reversion and an antiphase mode where the input voltage and the input current of the mobile side rectifier 32 are shifted with respect to each other according to a predetermined range.

As shown in Fig. 4, in a step S20, operatively executed by the mobile side controller 40, the mobile side rectifier 32 is operated in the second operative mode. As outlined above and explained in more detail in the following this may be achieved by controlling at least one switching element connected in parallel to at least one rectifying element of the mobile side rectifier 32 to change the first operative mode of the mobile side rectifier 32 to the second operative mode upon occurrence of the failure state in the mobile side circuit.

As shown in Fig. 4, in a step S22, operatively executed by the mobile side failure detector 42 and the mobile side controller 40, it will be checked whether the failure prevails at the mobile side. Such a check may be implemented according to a predetermined interval, upon issuance of a related control signal, or any other suitable condition. If the result of step 22 is negative the operation of the mobile side circuit in the second operative mode will continue and otherwise the procedure will continue with operation of the mobile side circuit 24 in the first operative mode.

It should be noted that according to the present invention the first operative mode may be kept constant, e.g., in full -bridge mode or half-bridge mode, or may change from full - bridge mode to half-bridge mode when the operative conditions during failure free operation of the mobile side require so.

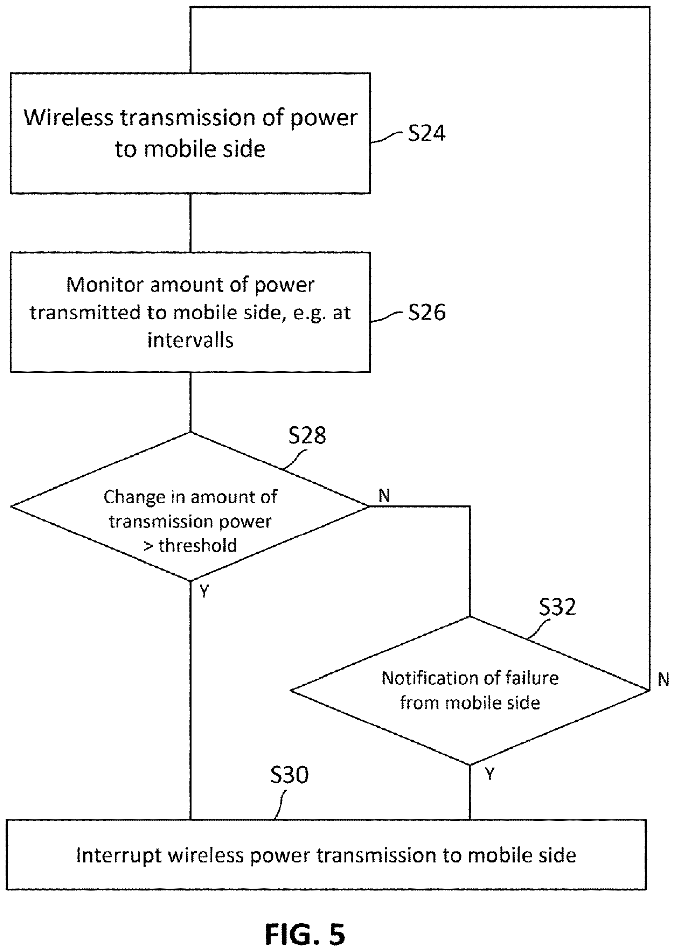

Fig. 5 shows a flowchart of operation for the stationary side circuit of the wireless power transmission system according to the present invention.

As shown in Fig. 5 and assuming that the wireless power transmission has started, in a step S24, operatively being controlled by the stationary side controller 16, wireless power transfer takes place from the stationary side to the mobile side. Then in a step S26, operatively executed by the stationary side controller 16, the amount of power transmitted to the mobile side will be monitored. It should be noted that such monitoring may be implemented at regular intervals, at change of operative conditions, or under any other suitable condition.

As shown in Fig. 5, in a step S28, operatively executed by the stationary side controller 16, it will be determined whether the change in the amount of transmission power or current exceeds a predetermined threshold or not. A typical range for the predetermined threshold according to the present invention may lie in the range of 5 % to 20 %. If the evaluation in step S28 is affirmative, there follows a step S30, operatively executed by the stationary side controller 16, to interrupt wireless power transmission to the mobile side. The interruption of power supply to the mobile side circuit 24 allows to avoid any damage to circuit elements of the mobile side circuit 24 in a very efficient and safe manner.

As shown in Fig. 5 and as an option, if the evaluation in Step S28 is not affirmative, another way to achieve interruption of the power supply to the mobile side circuit 24 is the exchange of a notification of failure state from the mobile side circuit to the stationary side circuit in a step 32, operatively executed by the mobile side controller 40 and the mobile side communication interface 46 as well as the stationary side controller 16 and the stationary side communication interface 48.

In the following different examples for change of operative mode in the mobile side rectifier 32, according to a first example explained for a better understanding of the present invention will be explained assuming the mobile side rectifier has a full-bridge circuit topology.

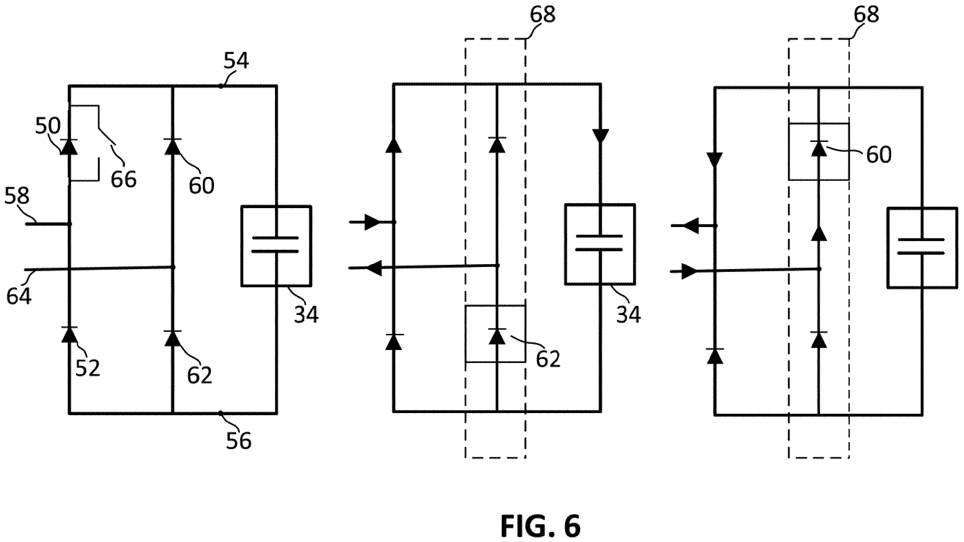

Fig. 6 shows a first example for change of the operative mode of the mobile side rectifier 32 from a full-bridge mode to a half-bridge mode and vice versa according to a first example explained for a better understanding of the present invention.

As shown in Fig. 6, the mobile side rectifier 32 is a full-bridge rectifier and has a first rectifying element 50 and a second rectifying element 52 connected in series between a first output terminal 54 and a second output terminal 56 of the full-bridge rectifier and having a common connection terminal connected to a first input terminal 58 of the full-bridge rectifier.

As shown in Fig. 6, the mobile side rectifier 32 further has a third rectifying element 60 and a fourth rectifying element 62 connected in series between the first output terminal 54 and the second output terminal 56 of the full-bridge rectifier 32 and having a common connection terminal connected to a second input terminal 64 of the full-bridge rectifier.

As shown in Fig. 6, the mobile side rectifier further has a first switching element 66 which is connected in parallel to the first rectifying element 50.

As shown in Fig. 6, assuming that the first rectifying element 50 is bypassed upon occurrence of a failure state in the mobile side circuit 24, then, during a positive half-cycle of the input current to the mobile side rectifier 32, the current flows as shown in the middle illustration of Fig. 6, while during a negative half-cycle of the input current to the mobile side rectifier 32 flows as shown in the right illustration of Fig. 6.

As shown in Fig. 6, during the positive half-cycle of the input current the current flows across the first switching element 66, the energy storage circuit 34 and the fourth rectifying element 62. Otherwise, during the negative half-cycle of the input current the current flows across the third rectifying element 60 and the first switching element 66.

From the above it should be clear that by short circuiting or equivalently by-passing the first rectifying element 50 there is achieved a change of operative mode in the mobile side rectifier from full-bridge mode to half-bridge mode realizing a first half-bridge circuit 68. Also, a short circuit of the mobile side resonant circuit 26 and related excessive transient behavior of voltage and current at the mobile side circuit 24 may be avoided as the current will always flow across one rectifying element of the first half-bridge circuit 68, the first switching element 66 and - during the positive half-cycle - the energy storage circuit 34.

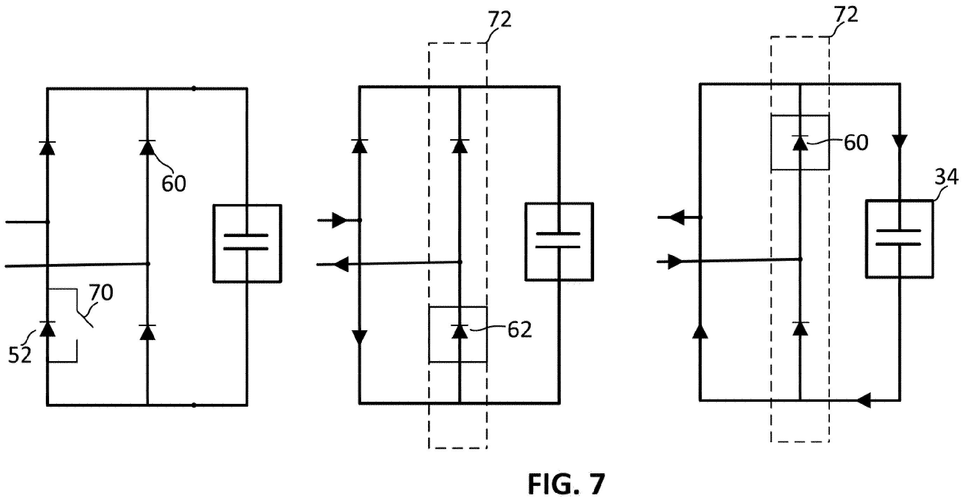

Fig. 7 shows a second example for change of operative mode of the mobile side rectifier from a full-bridge mode to a half-bridge mode and vice versa according to the first example explained for a better understanding of the present invention.

The basic circuit topology for the mobile rectifier circuit 32 shown in Fig. 7 is similar to the one outlined above with respect to Fig. 6, the difference being that a second switching element 70 is connected to the second rectifying element 52.

As shown in Fig. 7, assuming that the second rectifying element 52 is bypassed upon occurrence of a failure state in the mobile side circuit 24 then during a positive half-cycle of the input current to the mobile side rectifier 32 the current flows as shown in the middle illustration of Fig. 7, while during a negative half-cycle of the input current to the mobile side rectifier 32 flows as shown in the right illustration of Fig. 7.

As shown in Fig. 7, during the positive half-cycle of the input current the current flows across the second switching element 70 and the fourth rectifying element 62. Otherwise, during the negative half-cycle of the input current the current flows across the third rectifying element 60 and the energy storage circuit 34, and the second switching element 70.

From the above, it should be clear that by short circuiting or equivalently by-passing the second rectifying element 52 there is achieved a change of operative mode in the mobile side rectifier from full-bridge mode to half-bridge mode realizing a second half-bridge circuit 72. Further, the effects achieved according to the example shown in Fig. 7 are the same as explained above with respect to Fig. 6.

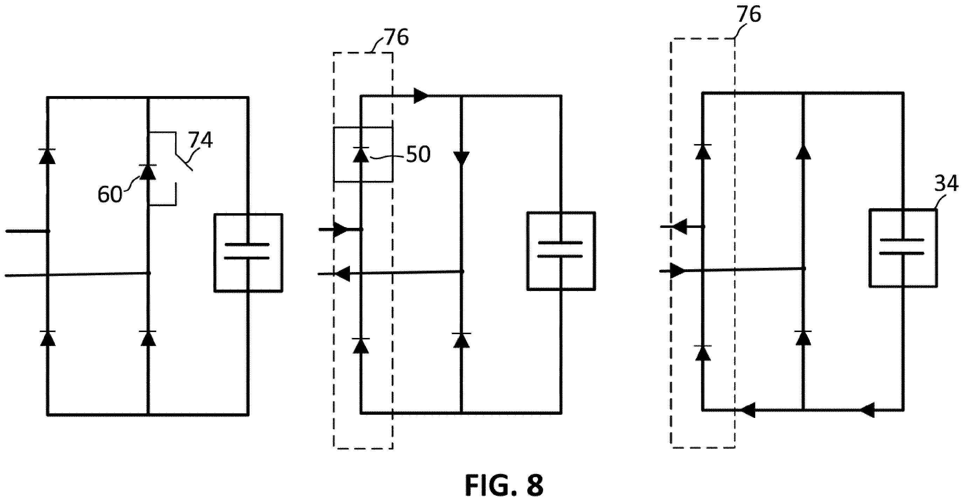

Fig. 8 shows a third example for change of operative mode of the mobile side rectifier from a full-bridge mode to a half-bridge mode and vice versa according to the first example explained for a better understanding of the present invention.

The basic circuit topology for the mobile rectifier circuit 32 shown in Fig. 8 is similar to the one outlined above with respect to Fig. 6, the difference being that a third switching element 74 is connected to the third rectifying element 60.

As shown in Fig. 8, assuming that the third rectifying element 60 is bypassed upon occurrence of a failure state in the mobile side circuit 24 then during a positive half-cycle of the input current to the mobile side rectifier 32 the current flows as shown in the middle illustration of Fig. 8, while during a negative half-cycle of the input current to the mobile side rectifier 32 flows as shown in the right illustration of Fig. 8.

As shown in Fig. 8, during the positive half-cycle of the input current the current flows across the first rectifying element 50 and the third switching element 74. Otherwise, during the negative half-cycle of the input current the current flows across the third switching element 74, the energy storage circuit 34, and the second rectifying element 52.

From the above it should be clear that by short circuiting or equivalently by-passing the third rectifying element 60 there is achieved a change of operative mode in the mobile side rectifier from full-bridge mode to half-bridge mode realizing a third half bridge circuit 76. Further, the effects achieved according to the example shown In Fig. 8 are the same as explained above with respect to Fig. 6.

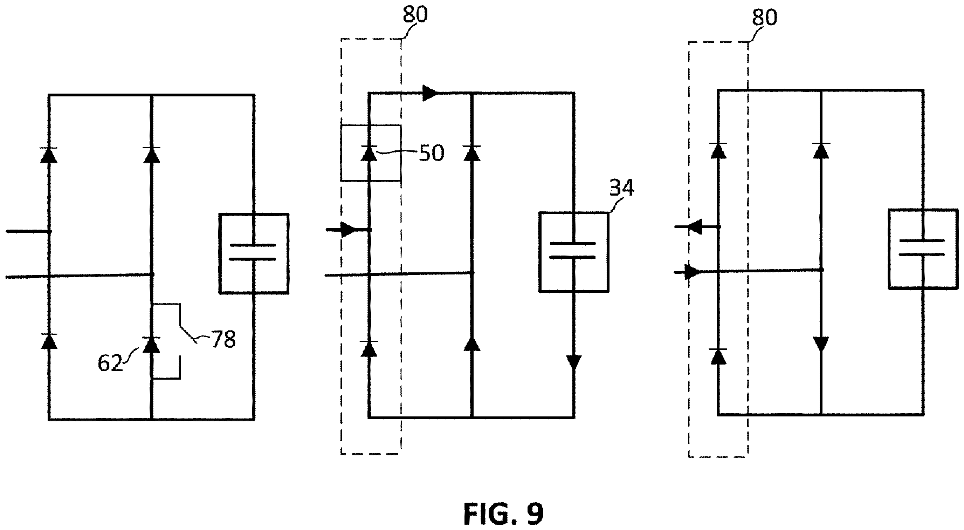

Fig. 9 shows a fourth example for change of operative mode of the mobile side rectifier from a full-bridge mode to a half-bridge mode and vice versa according to the first example explained for a better understanding of the present invention.

The basic circuit topology for the rectifier circuit shown in Fig. 9 is similar to the one outlined above with respect to Fig. 6, the difference being that a fourth switching element 78 is connected to the fourth rectifying element 62.

As shown in Fig. 9, assuming that the fourth rectifying element 62 is bypassed upon occurrence of a failure state in the mobile side circuit 24 then during a positive half-cycle of the input current to the mobile side rectifier 32 the current flows as shown in the middle illustration of Fig. 9, while during a negative half-cycle of the input current to the mobile side rectifier 32 flows as shown in the right illustration of Fig. 9.

As shown in Fig. 9, during the positive half-cycle of the input current the current flows across the first rectifying element 50, the energy storing unit 34 and the fourth switching element 78. Otherwise, during the negative half-cycle of the input current the current flows across the fourth switching element 78 and the second rectifying element 52.

From the above, it should be clear that by short circuiting or equivalently by-passing the fourth rectifying element 62 there is achieved a change of operative mode in the mobile side rectifier from full-bridge mode to half-bridge mode realizing a fourth half bridge circuit 80. Further, the effects achieved according to the example shown In Fig. 8 are the same as explained above with respect to Fig. 6.

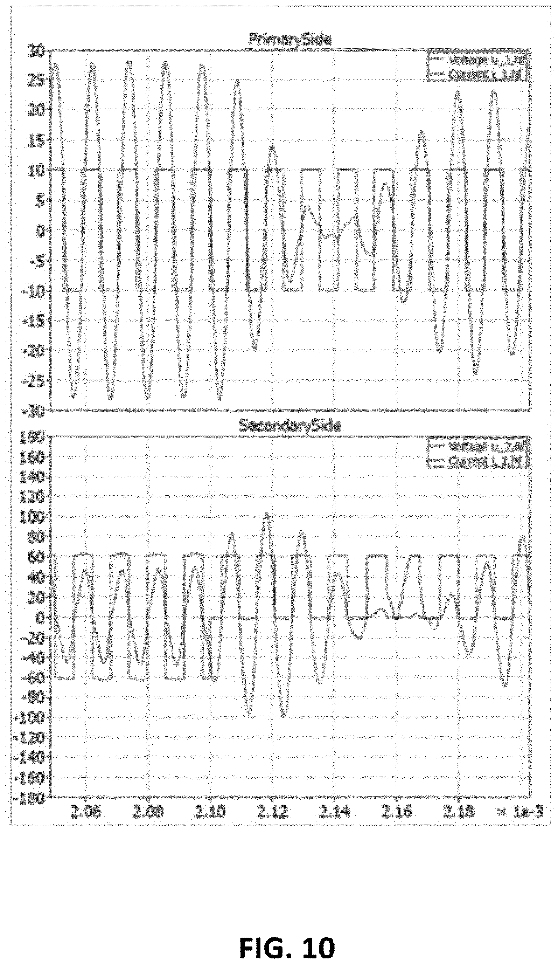

Fig. 10 shows a signal diagram for voltage and current at the stationary side circuit 12 and the mobile side circuit 24 upon change of operative mode of the mobile side rectifier from a full-bridge mode to a half-bridge mode and vice versa according to the first example explained for a better understanding of the present invention.

As shown in Fig. 10, compared to the constellation shown in Fig. 2 according to the present invention the transient behavior of voltage and current shows significantly reduced overshoot and thus achieves a related reduced load on the circuit elements of the mobile side circuit 24. As shown in Fig. 10, current stresses in the mobile rectifier circuit 32 are avoidable compared to the hard short circuit scenario as neither high currents nor high voltages are generated.

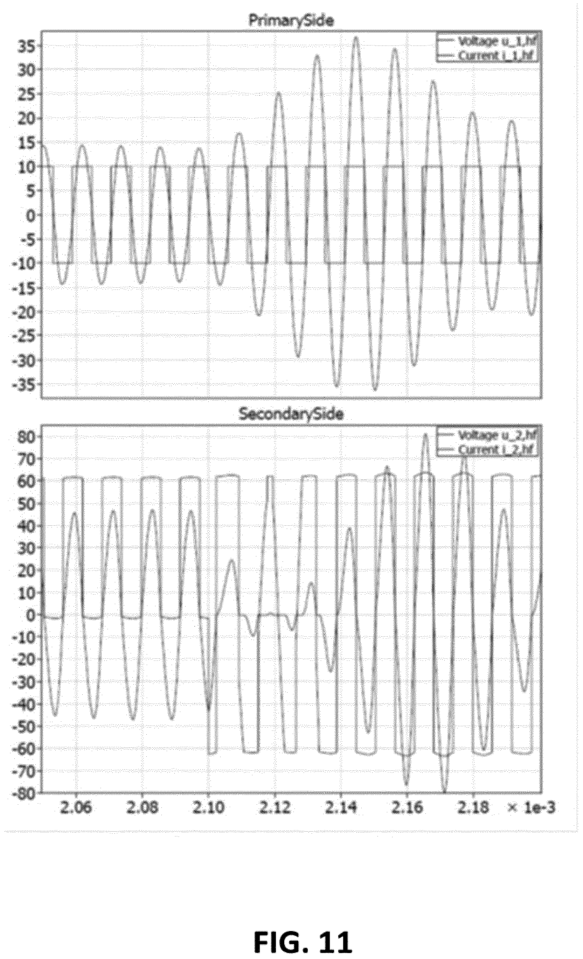

Fig. 11 shows a signal diagram for voltage and current at the stationary side circuit 12 and the mobile side circuit 24 upon change of operative mode of the mobile side rectifier 32 from a half-bridge mode to a full-bridge mode and vice versa according to the first example explained for a better understanding of the present invention.

As shown in Fig. 11, the present invention leads to similar results as shown in Fig. 10 when a change of operation mode for the mobile resonant circuit 32 is from a half-bridge mode to a full-bridge mode.

Further, the example shown in Fig. 11 is related to the scenario illustrated above with respect to Fig. 5 where the stationary side controller 16 detects increase of power supply to the mobile side circuit 24 or receives a notification of failure occurrence at the mobile side circuit 24 to then interrupt wireless power transfer to the mobile side circuit 24.

In the following different examples for change of operative mode in the mobile side rectifier 32 according to a first embodiment of the present invention will be explained assuming that the mobile side rectifier has a full-bridge circuit topology. The difference with respect to the examples illustrated above with respect to Fig. 6 to Fig. 10 is that in the examples to follow there are provided two switching elements for change of operative mode of the mobile side rectifier 32.

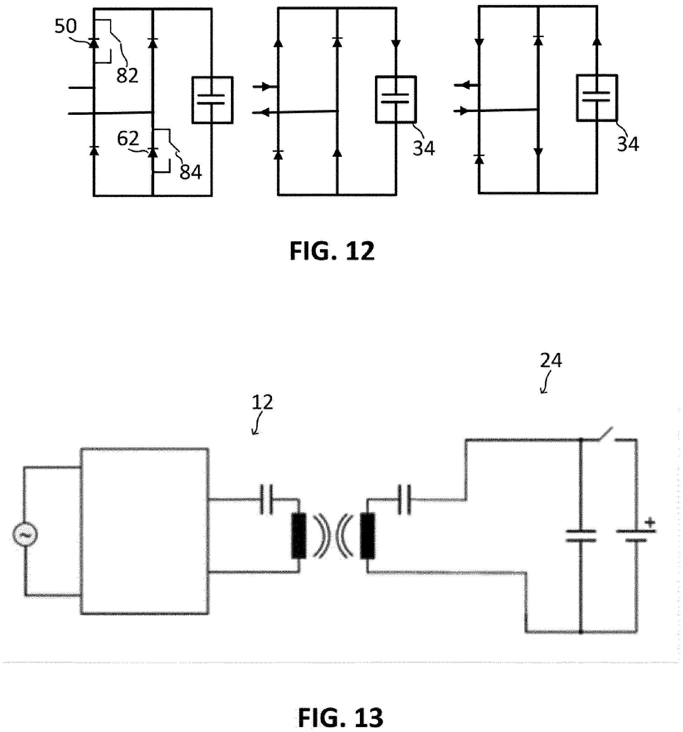

Fig. 12 shows a first example for change of the operative mode of the mobile side rectifier 32 from a full-bridge mode to a DC mode without polarity reversion and vice versa according to a first embodiment of the present invention.

As shown in Fig. 12, the mobile side rectifier 32 comprises one switching element 82 connected in parallel to the first rectifying element 50 and one switching element 84 connected in parallel to the fourth rectifying element 62.

Operatively, the mobile side control circuit 40 is adapted to close or open simultaneously the switching element 82 connected in parallel to the first rectifying element 50 and the switching element 84 connected in parallel to the fourth rectifying element 62 upon occurrence of a failure state in the mobile side circuit 24.

As shown in Fig. 12, assuming that the first rectifying element 50 and the fourth rectifying element 62 are bypassed upon occurrence of a failure state in the mobile side circuit 24 then during a positive half-cycle of the input current to the mobile side rectifier 32 the current flows as shown in the middle illustration of Fig. 12, while during a negative half-cycle of the input current to the mobile side rectifier 32 flows as shown in the right illustration of Fig. 12.

As shown in Fig. 12, during the positive half-cycle of the input current the current flows across the switching element 82 connected in parallel to the first rectifying element 50, the energy storage circuit 34, and the switching element 84 connected in parallel to the fourth rectifying element 50. Further, during the negative half-cycle of the input current the current flows across the switching element 84 connected in parallel to the fourth rectifying element 62, the energy storage circuit 34, and the switching element 82 connected in parallel to the first rectifying element 50.

Fig. 13 shows an equivalent schematic diagram for the change of the operative mode of the mobile side rectifier from a full-bridge mode to a DC mode without polarity reversion as shown in Fig. 12.

As shown in Fig. 13, to change the second operative mode to the DC-mode without polarity reversal of the voltage across the energy storage circuit 34. By switching on both switching elements 82 and 84 the power transfer to the load 38 is interrupted immediately. The secondary resonant circuit is connected to a DC-voltage which is equal to the voltage of the energy storage circuit 34. Optionally, the stationary side circuit 12 of the wireless power transmission system detects this event and shuts down the power supply of the from the stationary side circuit 12 to the mobile side circuit 24.

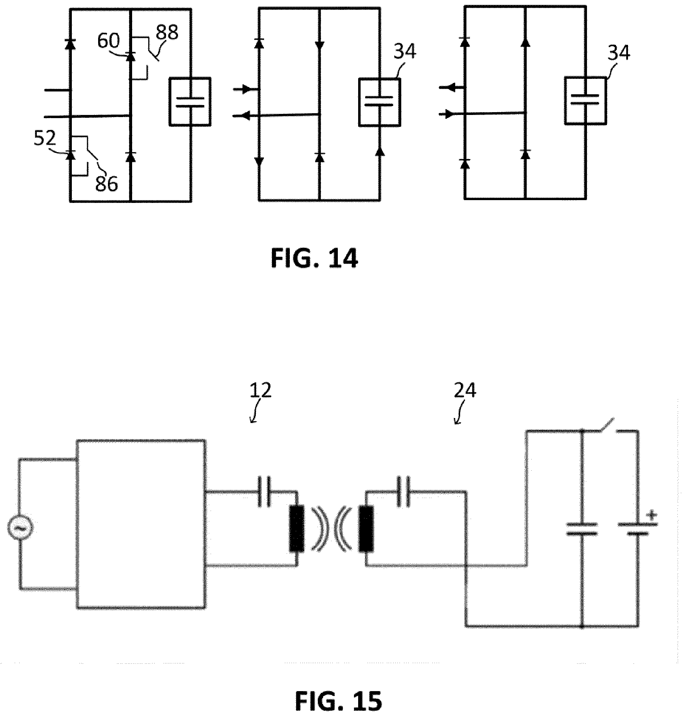

Fig. 14 shows a second example for change of the operative mode of the mobile side rectifier from a full-bridge mode to a DC mode with polarity reversion and vice versa according to the first embodiment of the present invention.

As shown in Fig. 14, the mobile side rectifier 32 comprises one switching element 86 connected in parallel to the second rectifying element 52 and one switching element 88 connected in parallel to the third rectifying element 60.

Operatively, the mobile side control circuit 40 is adapted to close or open simultaneously the switching element 86 connected in parallel to the second rectifying element 52 and the switching element 88 connected in parallel to the third rectifying element 60 upon occurrence of a failure state in the mobile side circuit 24.

As shown in Fig. 14, assuming that the second rectifying element 52 and the third rectifying element 60 are bypassed upon occurrence of a failure state in the mobile side circuit 24 then during a positive half-cycle of the input current to the mobile side rectifier 32 the current flows as shown in the middle illustration of Fig. 14, while during a negative half-cycle of the input current to the mobile side rectifier 32 flows as shown in the right illustration of Fig. 14.

As shown in Fig. 14, during the positive half-cycle of the input current the current flows across the switching element 86 connected in parallel to the second rectifying element 52, the energy storage circuit 34, and the switching element 88 connected in parallel to the third rectifying element 60. Further, during the negative half-cycle of the input current the current flows across the switching element 88 connected in parallel to the third rectifying element 60, the energy storage circuit 34, and the switching element 86 connected in parallel to the second rectifying element 52.

Fig. 15 shows an equivalent schematic diagram for the change of the operative mode of the mobile side rectifier from a full-bridge mode to a DC mode with polarity reversion as shown in Fig. 14.

As shown in Fig. 15, the difference between the first example of the first embodiment of the present invention explained above with respect to Fig. 12 and Fig. 13 and the second example of the first embodiment of the present invention explained with respect to Fig. 13 and Fig. 14 is a DC mode where the voltage across the energy storage circuit 34 is mapped to the input terminals of the rectifier circuit 32 with polarity reversal. Also, here, the mobile side resonant circuit 26 is never short circuited so that similar effects as outlined above for the first example of the first embodiment of the present invention may be achieved for the second example of the first embodiment of the present invention.

In the following, different examples for change of operative mode in the mobile side rectifier 32 according to a second embodiment of the present invention will be explained assuming that the mobile side rectifier has a full-bridge circuit topology. The difference with respect to the examples illustrated above with respect to Fig. 6 to Fig. 10 is that in the examples to follow there are provided four switching elements for change of operative mode of the mobile side rectifier 32.

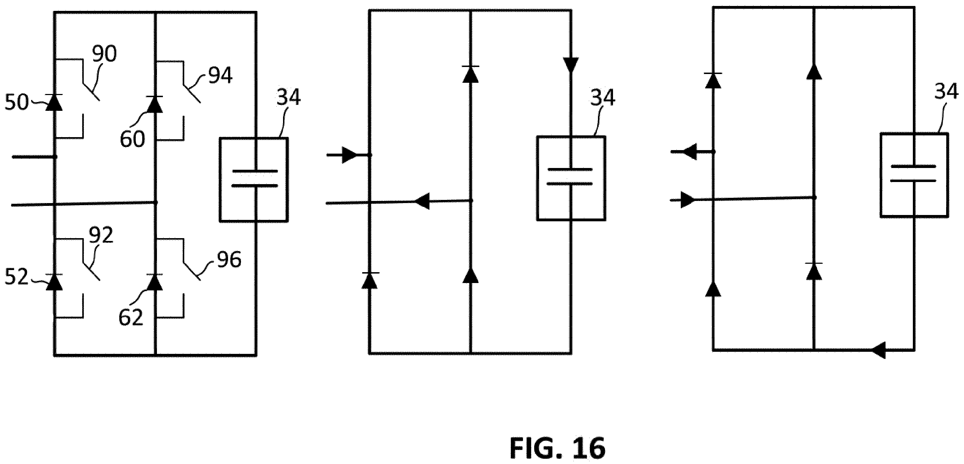

Fig. 16 shows an example for change of the operative mode of the mobile side rectifier 32 from a full-bridge mode to an antiphase mode and vice versa according to a second embodiment of the present invention.

As shown in Fig. 16, according to the second embodiment of the resent invention the mobile side rectifier 32 has one switching element 90 connected in parallel to the first rectifying element 50, one switching element 92 connected in parallel to the second rectifying element 52, one switching element 94 connected in parallel to the third rectifying element 60, and one switching element 96 connected in parallel to the fourth rectifying element 62.

Operatively, the mobile side control circuit 40 is adapted to implement the antiphase mode by simultaneously closing the switching element 90 connected in parallel to the first rectifying element 50 and the switching element 96 connected in parallel to the fourth rectifying element 62 and opening the switching element 92 connected in parallel to the second rectifying element 52 and the switching element 94 connected in parallel the third rectifying element 60 during a negative cycle of the current from the mobile side resonant circuit 26.

Further, operatively, the mobile side control circuit 40 is adapted to implement the antiphase mode by simultaneously closing the switching element 92 connected in parallel to the second rectifying element 52 and the switching element 94 connected in parallel to the third rectifying element 60 and opening the switching element 90 connected in parallel to the first rectifying element 50 and the switching element 96 connected in parallel to the fourth rectifying element 62 during a positive cycle of the current from the mobile side resonant circuit 26.

As shown in Fig. 16, assuming that the first rectifying element 50 and the fourth rectifying element 62 are bypassed upon occurrence of a failure state in the mobile side circuit 24 then during a negative half-cycle of the input current to the mobile side rectifier 32 the current flows as shown in the middle illustration of Fig. 16 while during a positive half-cycle of the input current to the mobile side rectifier 32 flows as shown in the right illustration of Fig. 16.

As shown in Fig. 16, during the negative half-cycle of the input current the current flows across the switching element 92 connected in parallel to the first rectifying element 50, the energy storage circuit 34, and the switching element 96 connected in parallel to the fourth rectifying element 62. Further, during the positive half-cycle of the input current the current flows across the switching element 94 connected in parallel to the third rectifying element 60, the energy storage circuit 34, and the switching element 96 connected in parallel to the fourth rectifying element 62.

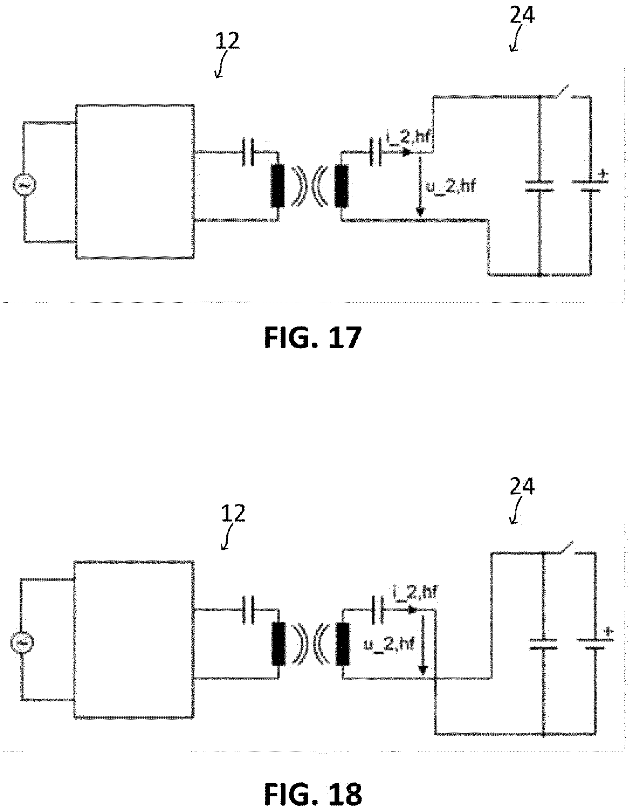

Fig. 17 shows an equivalent schematic diagram for the for change of the operative mode of the mobile side rectifier from a full-bridge mode to the antiphase mode as shown in Fig. 16 for a negative cycle of the input current to the mobile side rectifier.

As shown in Fig. 17, in the case of occurrence of a failure state in the mobile side circuit 24, the four switching elements 90, 92, 94, 96 create a voltage u_2,hf which has a 180° phase shift in comparison to the current i_2,hf, i.e. create a positive voltage u_2,hf during a negative half cycle of the current i_2,hf. Thus, energy will be transferred back to the stationary side where the stationary side controller 15 may detect this event and shut down the supply of power the stationary side resonant circuit 26 and thus also to the mobile side circuit 24.

Fig. 18 shows an equivalent schematic diagram for the change of the operative mode of the mobile side rectifier from a full-bridge mode to the antiphase mode as shown in Fig. 16 for a positive cycle of the input current to the mobile side rectifier.

As shown in Fig. 18, in the case of occurrence of a failure state in the mobile side circuit 24, the four switching elements 90, 92, 94, 96 create a voltage u_2,hf which has a 180° phase shift in comparison to the current i_2,hf, i.e. create a negative voltage u_2,hf during a positive half cycle of the current i_2,hf. Thus, also during the positive half cycle of the current i_2,hf energy will be transferred back to the stationary side. Again, the stationary side controller 16 may shut down the supply of power to the mobile side circuit 24.

It should be noted that according to the present invention the phase shift between the voltage u_2,hf and the current i_2,hf is not restricted to a value of 180°. Generally, according to the present invention the mobile side controller 40 may be adapted to control the switching elements 90, 92, 94, 96 to create a voltage u_2,hf which has a phase shift in comparison to the current i_2,hf which lies in the range of 180°±30°. As an alternative the phase shift may lie in the range of 90°±30° which leads to a reduced power transfer to the mobile side circuit while at the same time reducing the stress on related circuit elements compared to the range of 180°±30°.

In the following an example for change of operative mode in the mobile side rectifier 32 according to a second example explained for a better understanding of the present invention will be explained assuming the mobile side rectifier has a half-bridge circuit topology.

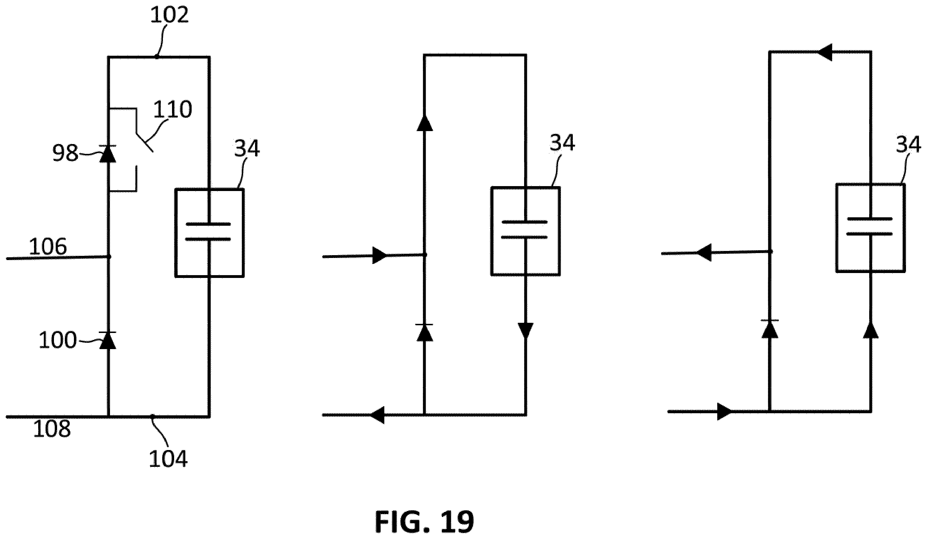

Fig. 19 shows an example change of the operative mode of the mobile side rectifier from a half-bridge mode to the DC mode without polarity reversal and vice versa upon occurrence of a failure at the mobile side according to a second example explained for a better understanding of the present invention.

As shown in Fig. 19, according to the second example explained for a better understanding of the present invention the mobile side rectifier 32 is a half-bridge rectifier having a first rectifying element 98 and a second rectifying element 100 connected in series between a first output terminal 102 and a second output terminal 104 of the half-bridge rectifier and having a common connection terminal connected to a first input terminal 106 of the half-bridge rectifier and having the connection terminal of the second rectifying element different from the common connection point connected to a second input terminal 108 of the half-bridge rectifier. Further, according to the second example explained for a better understanding of the present invention one switching element 110 is connected in parallel to the first rectifying element 98.

According to the second example explained for a better understanding, operatively the mobile side control circuit 40 is adapted to close the switching element 110 connected in parallel to the first rectifying element 98 to change the second operative mode to the DC mode without polarity reversal of the voltage across the energy storage circuit 34.

As shown in Fig. 19, assuming that the first rectifying element 98 of the half-bridge rectifier is bypassed upon occurrence of a failure state in the mobile side circuit 24 then during a positive half-cycle of the input current to the mobile side rectifier 32 the current flows as shown in the middle illustration of Fig. 19, while during a negative half-cycle of the input current to the mobile side rectifier 32 flows as shown in the right illustration of Fig. 19. I.e., in both case the current will flow across the switching element 110 and the energy storage circuit 34, however, along different directions.

## Claims

1. Mobile side circuit of a wireless power transmission system, comprising:
a mobile side resonant circuit (26) inductively coupled to a stationary side resonant circuit (18) of the wireless power transmission system;
a mobile side rectifier (32) adapted to operate in a first operative mode being a full bridge rectification mode during failure free operation of the mobile side circuit, the mobile side rectifier (32) is a full-bridge rectifier having a first rectifying element (50) and a second rectifying element (52) connected in series between a first output terminal (54) and a second output terminal (56) of the full-bridge rectifier and having a common connection terminal connected to a first input terminal (58) of the full-bridge rectifier and having a third rectifying element (60) and a fourth rectifying element (62) connected in series between the first output terminal (54) and the second output terminal (56) of the full-bridge rectifier and having a common connection terminal connected to a second input terminal (64) of the full-bridge rectifier, whereby the first input terminal (58) and the second input terminal (64) of the mobile side rectifier (32) are connected to the mobile side resonant circuit (26);
an energy storage circuit (34) connected in parallel to the output terminals of the mobile side rectifier (32) and adapted to smooth the output of the mobile side rectifier (32);
***characterized in that***
the mobile side rectifier (32) comprises a first switching element (82) connected in parallel to the first rectifying element (50) and a second switching element (84) connected in parallel to the fourth rectifying element (62); and
a mobile side control circuit (53) is adapted to close simultaneously the first switching element (82) and the second switching element (84) upon occurrence of a failure state in the mobile side circuit (24) to change operation from the first operative mode to a second operative mode where a DC voltage across the energy storage circuit (34) is switched through to the first input terminal (58) and the second input terminal (64) of the mobile side rectifier (32) without polarity reversal and without short-circuit of the mobile side resonant circuit (26); or
the mobile side rectifier (32) comprises a third switching element (86) connected in parallel to the second rectifying element (52) and a fourth switching element (88) connected in parallel to the third rectifying element (60); and
the mobile side control circuit (40) is adapted to close or open simultaneously the third switching element (86) and the fourth switching element (88) upon occurrence of a failure state in the mobile side circuit (24) to change operation from the first operative mode to a third operative mode where a DC voltage across the energy storage circuit (34) is switched through to the first input terminal (58) and the second input terminal (64) of the mobile side rectifier (32) with polarity reversal and without short-circuit of the mobile side resonant circuit (26).

2. Mobile side circuit of a wireless power transmission system, comprising:
a mobile side resonant circuit (26) inductively coupled to a stationary side resonant circuit (18) of the wireless power transmission system;
a mobile side rectifier (32) adapted to operate in a first operative mode being a full bridge rectification mode during failure free operation of the mobile side circuit, the mobile side rectifier (32) is a full-bridge rectifier having a first rectifying element (50) and a second rectifying element (52) connected in series between a first output terminal (54) and a second output terminal (56) of the full-bridge rectifier and having a common connection terminal connected to a first input terminal (58) of the full-bridge rectifier and having a third rectifying element (60) and a fourth rectifying element (62) connected in series between the first output terminal (54) and the second output terminal (56) of the full-bridge rectifier and having a common connection terminal connected to a second input terminal (64) of the full-bridge rectifier, whereby the first and the second input terminals (58, 64) of the mobile side rectifier (32) are connected to the mobile side resonant circuit (26);
an energy storage circuit (34) connected in parallel to the output terminals of the mobile side rectifier (32) and adapted to smooth the output of the mobile side rectifier (32);
***characterized by***
a first switching element (90) connected in parallel to the first rectifying element (50);
a second switching element (92) connected in parallel to the second rectifying element (52);
a third switching element (94) is connected in parallel to the third rectifying element (60); and
a fourth switching element (96) connected in parallel to the fourth rectifying element (62); wherein
a mobile side control circuit (40) adapted to control the first to fourth switching element (90, 92, 94, 96) to change the first operative mode of the mobile side rectifier (32) upon occurrence of a failure state in the mobile side circuit (24) to an antiphase mode where the input voltage and the input current of the mobile side rectifier (32) are phase-shifted with respect to each other according to a predetermined range of phase-shift and where energy is transferred back to a stationary side of the wireless power transmission system by
simultaneously closing the first switching element (90) and the fourth switching element (96) and opening the second switching element (92) and the third switching element (94) during a negative cycle of the current from the mobile side resonant circuit (26); and by
simultaneously closing the second switching element (92) and the third switching element (94) and opening the first switching element (90) and the fourth switching element (96) during a positive cycle of the current from the mobile side resonant circuit (26).

3. The mobile side circuit according to claim 2, wherein
the mobile side control circuit (40) is adapted to change the second operative mode to the antiphase mode such that an input voltage to the mobile side rectifier (32) has a phase shift in the range of 180°±30° or 90°±30° with respect to the input current to the mobile side rectifier (32) for back transfer of power from the mobile side circuit (24) to the stationary side circuit (12) of the wireless power transmission system.

4. The mobile side circuit according to one of the claim 1 to 3, comprising a mobile side detector (42) adapted to detect the occurrence of a failure state in the mobile side circuit (24), wherein the mobile side controller (40) is adapted to open a switch (36) connecting the energy storage circuit (36) to a mobile side load (38) when the mobile side detector (42) detects the occurrence of a failure state in the mobile side circuit (24).

5. The mobile side circuit according to one of the claims 1 to 4, comprising a mobile side communication interface (46) adapted to indicate the occurrence of a failure state at the mobile side circuit (24) to the stationary side control circuit (16) of the wireless power transmission system.

6. Wireless power transmission system, ***characterized by*** comprising:
at least one mobile side circuit (24) according to one of the claims 1 to 5;
a stationary side excitation unit (14) adapted to excite a stationary side resonant circuit (26) for wireless power transmission to the at least one mobile side circuit (24);
a stationary side controller (16) adapted to
control operation of the stationary side excitation unit (14),
monitor power transfer to the at least one mobile side circuit (24), and to
interrupt wireless power transmission when a change in an amount of power transmitted to the at least one mobile side circuit (24) exceeds a predetermined threshold.

7. Wireless power transmission system according to claim 6, wherein the stationary side control circuit (16) is adapted to interrupt wireless power transmission to the at least one mobile side circuit (24) when the amount of power transmitted to the mobile side circuit (24) changes 5 % or more.

8. Wireless power transmissions system according to claim 6 or 7, comprising a stationary side communication interface (48) adapted to receive notification of occurrence of a failure at the at least one mobile side circuit (24), wherein the stationary side control circuit (16) is adapted to interrupt wireless power transmission upon receipt of the notification of occurrence of a failure at the at least one mobile side circuit (24).

9. Method of operating a mobile side circuit of a wireless power transmission system according to claim 1, the method comprising:
a step (S14) of operating the mobile side rectifier (32) in a first operative mode being a full bridge rectification mode during failure free operation of the mobile side circuit;
a step of closing or opening simultaneously the first switching element (82) and the second switching element (84) upon occurrence of a failure state in the mobile side circuit (24) to change the operative mode to a second operative mode where a DC voltage across the energy storage circuit (34) is switched through to the first input terminal (58) and the second input terminal (64) of the mobile side rectifier (32) without polarity reversal and without short-circuit of the mobile side resonant circuit (26); or
a step of closing or opening simultaneously the third switching element (86) and the fourth switching element (88) upon occurrence of a failure state in the mobile side circuit (24) to change from the first operative mode to a third operative mode where a DC voltage across the energy storage circuit (34) is switched through to the first input terminal (58) and the second input terminal (64) of the mobile side rectifier (32) with polarity reversal and without short-circuit of the mobile side resonant circuit (26) .

10. Method of operating a mobile side circuit of a wireless power transmission system according to claim 2, the method comprising:
a step (S14) of operating the mobile side rectifier (32) in a first operative mode being a full bridge rectification mode during failure free operation of the mobile side circuit; and
a step of controlling the first to fourth switching element (90, 92, 94, 96) to change the first operative mode of the mobile side rectifier (32) to an antiphase mode upon occurrence of a failure state in the mobile side circuit (24) where the input voltage and the input current of the mobile side rectifier (32) are phase-shifted with respect to each other according to a predetermined range of phase-shift and where energy is transferred back to a stationary side of the wireless power transmission system by
simultaneously closing the first switching element (90) and the fourth switching element (96) and opening the second switching element (92) and the third switching element (94) during a negative cycle of the current from the mobile side resonant circuit (26); and by
simultaneously closing the second switching element (92) and the third switching element (94) and opening the first switching element (90) and the fourth switching element (96) during a positive cycle of the current from the mobile side resonant circuit (26).

11. Method of operating a wireless power transmission system according to claim 6 comprising:
a step (S26, S8) of monitoring power transfer to the mobile side circuit (24); and
a step (S30) of interrupting wireless power transmission when a change in an amount of power transmitted to the mobile side circuit (24) exceeds a predetermined threshold.

## Patentansprüche

1. Schaltkreis einer mobilen Seite eines drahtlosen Energieübertragungssystems, umfassend:
einen Schwingkreis (26), der auf der mobilen Seite angeordnet und mit einem Schwingkreis (18), der auf einer stationären Seite des drahtlosen Energieübertragungssystems angeordnet ist, induktiv gekoppelt ist;
einen Gleichrichter (32), der auf der mobilen Seite angeordnet und so eingerichtet ist, dass er während des störungsfreien Betriebs des Schaltkreises der mobilen Seite in einem ersten Betriebsmodus arbeitet, der ein Vollbrückengleichrichtungsmodus ist, wobei der Gleichrichter (32) der mobilen Seite ein Vollbrückengleichrichter ist, der ein erstes Gleichrichterelement (50) und ein zweites Gleichrichterelement (52) aufweist, die zwischen einem ersten Ausgangsanschluss (54) und einem zweiten Ausgangsanschluss (56) des Vollbrückengleichrichters in Reihe geschaltet sind und einen gemeinsamen Anschluss aufweisen, der mit einem ersten Eingangsanschluss (58) des Vollbrückengleichrichters verbunden ist, wobei der Vollbrückengleichrichter ein drittes Gleichrichterelement (60) und ein viertes Gleichrichterelement (62) aufweist, die in Reihe zwischen dem ersten Ausgangsanschluss (54) und dem zweiten Ausgangsanschluss (56) des Vollbrückengleichrichters geschaltet sind und einen gemeinsamen Anschluss aufweisen, der mit einem zweiten Eingangsanschluss (64) des Vollbrückengleichrichters verbunden ist, wobei der erste Eingangsanschluss (58) und der zweite Eingangsanschluss (64) des Gleichrichters (32) der mobilen Seite mit dem Schwingkreis (26) der mobilen Seite verbunden sind;
einen Schaltkreis (34) eines Energiespeichers, der parallel zu den Ausgangsanschlüssen des Gleichrichters (32) der mobilen Seite geschaltet und dazu eingerichtet ist, das Ausgangssignal des Gleichrichters (32) der mobilen Seite zu glätten;
***dadurch gekennzeichnet, dass***
der Gleichrichter (32) der mobilen Seite ein erstes Schaltelement (82) aufweist, das parallel zu dem ersten Gleichrichterelement (50) geschaltet ist, und ein zweites Schaltelement (84), das parallel zu dem vierten Gleichrichterelement (62) geschaltet ist; und
ein Steuerschaltkreis (53) auf der mobilen Seite angeordnet und so eingerichtet ist, dass er beim Auftreten eines Fehlerzustands in dem Schaltkreis (24) der mobilen Seite gleichzeitig das erste Schaltelement (82) und das zweite Schaltelement (84) schließt, um den Betrieb von dem ersten Betriebsmodus in einen zweiten Betriebsmodus zu ändern, in dem eine Gleichspannung über den Schaltkreis (34) des Energiespeichers zu dem ersten Eingangsanschluss (58) und dem zweiten Eingangsanschluss (64) des Gleichrichters (32) der mobilen Seite durchgeschaltet wird, und zwar ohne Polaritätsumkehr und ohne Kurzschluss des Schwingkreises (26) der mobilen Seite; oder
der Gleichrichter (32) der mobilen Seite ein drittes Schaltelement (86) aufweist, das parallel zu dem zweiten Gleichrichterelement (52) geschaltet ist, und ein viertes Schaltelement (88), das parallel zu dem dritten Gleichrichterelement (60) geschaltet ist; und
der Steuerschaltkreis (40) der mobilen Seite so eingerichtet ist, dass er beim Auftreten eines Fehlerzustands des Schaltkreises (24) der mobilen Seite gleichzeitig das dritte Schaltelement (86) und das vierte Schaltelement (88) schließt oder öffnet, um den Betrieb von dem ersten Betriebsmodus in einen dritten Betriebsmodus zu ändern, in dem eine Gleichspannung über den Schaltkreis (34) des Energiespeichers zu dem ersten Eingangsanschluss (58) und dem zweiten Eingangsanschluss (64) des Gleichrichters (32) der mobilen Seite durchgeschaltet wird, und zwar mit Polaritätsumkehr und ohne Kurzschluss des Schwingkreises (26) der mobilen Seite.

2. Schaltkreis einer mobilen Seite eines drahtlosen Energieübertragungssystems, umfassend:
einen Schwingkreis (26), der auf der mobilen Seite angeordnet und mit einem Schwingkreis (18), der auf einer stationären Seite des drahtlosen Energieübertragungssystems angeordnet ist, induktiv gekoppelt ist;
einen Gleichrichter (32), der auf der mobilen Seite angeordnet und so eingerichtet ist, dass er während des störungsfreien Betriebs des Schaltkreises der mobilen Seite in einem ersten Betriebsmodus arbeitet, der ein Vollbrückengleichrichtungsmodus ist, wobei der Gleichrichter (32) der mobilen Seite ein Vollbrückengleichrichter ist, der ein erstes Gleichrichterelement (50) und ein zweites Gleichrichterelement (52) aufweist, die zwischen einem ersten Ausgangsanschluss (54) und einem zweiten Ausgangsanschluss (56) des Vollbrückengleichrichters in Reihe geschaltet sind und einen gemeinsamen Anschluss aufweisen, der mit einem ersten Eingangsanschluss (58) des Vollbrückengleichrichters verbunden ist, wobei der Vollbrückengleichrichter ein drittes Gleichrichterelement (60) und ein viertes Gleichrichterelement (62) aufweist, die in Reihe zwischen dem ersten Ausgangsanschluss (54) und dem zweiten Ausgangsanschluss (56) des Vollbrückengleichrichters geschaltet sind und einen gemeinsamen Anschluss aufweisen, der mit einem zweiten Eingangsanschluss (64) des Vollbrückengleichrichters verbunden ist, wobei der erste und der zweite Eingangsanschluss (58,64) des Gleichrichters (32) der mobilen Seite mit dem Schwingkreis (26) der mobilen Seite verbunden sind;
einen Schaltkreis (34) eines Energiespeichers, der parallel zu den Ausgangsanschlüssen des Gleichrichters (32) der mobilen Seite geschaltet und dazu eingerichtet ist, das Ausgangssignal des Gleichrichters (32) der mobilen Seite zu glätten;
***dadurch gekennzeichnet, dass***
ein erstes Schaltelement (90) parallel zu dem ersten Gleichrichterelement (50);
ein zweites Schaltelement (92) parallel zu dem zweiten Gleichrichterelement (52);
ein drittes Schaltelement (94) parallel zu dem dritten Gleichrichterelement (60); und
ein viertes Schaltelement (96) parallel zu dem vierten Gleichrichterelement (62) geschaltet ist; wobei
ein Steuerschaltkreis (40) auf der mobilen Seite angeordnet und so eingerichtet ist, dass er das erste bis vierte Schaltelement (90, 92, 94, 96) so steuert, dass der erste Betriebsmodus des Gleichrichters (32) der mobilen Seite beim Auftreten eines Fehlerzustands in dem Schaltkreis (24) der mobilen Seite in einen Gegenphasenmodus geändert wird, in dem die Eingangsspannung und der Eingangsstrom des Gleichrichters (32) der mobilen Seite in Bezug zueinander phasenverschoben sind, wobei die Phasenverschiebung in einem vorbestimmten Bereich liegt, und in dem Energie zurück zu der stationären Seite des drahtlosen Energieübertragungssystems übertragen wird, und zwar durch
gleichzeitiges Schließen des ersten Schaltelements (90) und des vierten Schaltelements (96) und Öffnen des zweiten Schaltelements (92) und des dritten Schaltelements (94) während eines negativen Zyklus des Stroms von dem Schwingkreis (26) der mobilen Seite; und durch
gleichzeitiges Schließen des zweiten Schaltelements (92) und des dritten Schaltelements (94) und Öffnen des ersten Schaltelements (90) und des vierten Schaltelements (96) während eines positiven Zyklus des Stroms von dem Schwingkreis (26) der mobilen Seite.

3. Schaltkreis einer mobilen Seite nach Anspruch 2, wobei
der Steuerschaltkreis (40) der mobilen Seite so eingerichtet ist, dass er den zweiten Betriebsmodus in den Gegenphasenmodus ändert, so dass eine Eingangsspannung an dem Gleichrichter (32) der mobilen Seite eine Phasenverschiebung im Bereich von 180°±30° oder 90°±30° in Bezug auf den Eingangsstrom an dem Gleichrichter (32) der mobilen Seite aufweist, um Leistung von dem Schaltkreis (24) der mobilen Seite an den Schaltkreis (12) der stationären Seite des drahtlosen Energieübertragungssystems zurück zu übertragen.

4. Schaltkreis einer mobilen Seite nach einem der Ansprüche 1 bis 3, umfassend einen Detektor (42), der auf der mobilen Seite angeordnet und dazu eingerichtet ist, das Auftreten eines Fehlerzustandes in dem Schaltkreis (24) der mobilen Seite zu erfassen, wobei der Steuerschaltkreis (40) der mobilen Seite dazu eingerichtet ist, einen Schalter (36) zu öffnen, der den Schaltkreis (36) des Energiespeichers mit einer Last (38) der mobilen Seite verbindet, wenn der Detektor (42) der mobilen Seite das Auftreten eines Fehlerzustandes in dem Schaltkreis (24) der mobilen Seite erfasst.

5. Schaltkreis einer mobilen Seite nach einem der Ansprüche 1 bis 4 mit einer Kommunikationsschnittstelle (46), die auf der mobilen Seite angeordnet und dazu eingerichtet ist, das Auftreten eines Fehlerzustandes an dem Schaltkreis (24) der mobilen Seite dem Steuerschaltkreis (16) der stationären Seite des drahtlosen Energieübertragungssystems anzuzeigen.

6. Drahtloses Energieübertragungssystem, ***gekennzeichnet durch:***
mindestens einen Schaltkreis (24) einer mobilen Seite nach einem der Ansprüche 1 bis 5;
eine Anregungseinheit (14), die auf einer stationären Seite angeordnet und dazu eingerichtet ist, einen Schwingkreis (26) der stationären Seite zur drahtlosen Energieübertragung an den mindestens einen Schaltkreis (24) einer mobilen Seite anzuregen;
einen Steuerschaltkreis (16), der auf der stationären Seite angeordnet und dazu eingerichtet ist,
den Betrieb der Anregungseinheit (14) der stationären Seite zu steuern,
die Leistungsübertragung zu dem mindestens einen Schaltkreis einer mobilen Seite (24) zu überwachen und
die drahtlose Energieübertragung zu unterbrechen, wenn eine Änderung der an den mindestens einen Schaltkreis (24) einer mobilen Seite übertragenen Energiemenge einen vorgegebenen Schwellenwert überschreitet.

7. Drahtloses Energieübertragungssystem nach Anspruch 6, wobei der Schaltkreis (16) der stationären Seite so eingerichtet ist, dass er die drahtlose Energieübertragung zu dem mindestens einen Schaltkreis (24) einer mobilen Seite unterbricht, wenn sich die an den Schaltkreis (24) einer mobilen Seite übertragene Energiemenge um 5 % oder mehr ändert.

8. Drahtloses Energieübertragungssystem nach Anspruch 6 oder 7, mit einer Kommunikationsschnittstelle (48), die auf der stationären Seite angeordnet und derart eingerichtet ist, dass sie eine Benachrichtigung über das Auftreten eines Ausfalls an dem mindestens einen Schaltkreis (24) einer mobilen Seite empfängt, wobei der Steuerschaltkreis (16) der stationären Seite so eingerichtet ist, dass er die drahtlose Energieübertragung bei Empfang der Benachrichtigung über das Auftreten eines Ausfalls an dem mindestens einen Schaltkreis (24) einer mobilen Seite unterbricht.

9. Verfahren zum Betreiben eines Schaltkreises einer mobilen Seite eines drahtlosen Energieübertragungssystems nach Anspruch 1, wobei das Verfahren folgende Schritte umfasst:
einen Schritt (S14) zum Betreiben des Gleichrichters (32) auf der mobilen Seite in einem ersten Betriebsmodus, der ein Vollbrückengleichrichtungsmodus ist, während des störungsfreien Betriebs des Schaltkreises auf der beweglichen Seite;
einen Schritt des gleichzeitigen Schließens oder Öffnens des ersten Schaltelements (82) und des zweiten Schaltelements (84) beim Auftreten eines Fehlerzustands in dem Schaltkreis (24) der mobilen Seite, um den Betriebsmodus in einen zweiten Betriebsmodus zu ändern, in dem eine Gleichspannung über den Schaltkreis (34) des Energiespeichers zu dem ersten Eingangsanschluss (58) und dem zweiten Eingangsanschluss (64) des Gleichrichters (32) der mobilen Seite durchgeschaltet wird, und zwar ohne Polaritätsumkehr und ohne Kurzschluss des Schwingkreises (26) der mobilen Seite; oder
einen Schritt des gleichzeitigen Schließens oder Öffnens des dritten Schaltelements (86) und des vierten Schaltelements (88) beim Auftreten eines Fehlerzustands in dem Schaltkreis (24) der mobilen Seite, um von dem ersten Betriebsmodus in einen dritten Betriebsmodus zu wechseln, in dem eine Gleichspannung über den Schaltkreis (34) des Energiespeichers zu dem ersten Eingangsanschluss (58) und dem zweiten Eingangsanschluss (64) des Gleichrichters (32) der mobilen Seite durchgeschaltet wird, und zwar mit Polaritätsumkehr und ohne Kurzschluss des Schwingkreises (26) der mobilen Seite.

10. Verfahren zum Betreiben eines Schaltkreises einer mobilen Seite eines drahtlosen Energieübertragungssystems nach Anspruch 2, wobei das Verfahren folgende Schritte umfasst:
einen Schritt (S14) zum Betreiben des Gleichrichters (32) der mobilen Seite in einem ersten Betriebsmodus, der ein Vollbrückengleichrichtungsmodus ist, während des störungsfreien Betriebs des Schaltkreises der mobilen Seite; und
einen Schritt des Steuerns des ersten bis vierten Schaltelements (90, 92, 94, 96), um den ersten Betriebsmodus des Gleichrichters (32) der mobilen Seite bei Auftreten eines Fehlerzustands in dem Schaltkreis (24) der mobilen Seite in einen Gegenphasenmodus zu ändern, in dem die Eingangsspannung und der Eingangsstrom des Gleichrichters (32) der mobilen Seite in Bezug zueinander phasenverschoben sind, wobei die Phasenverschiebung in einem vorbestimmten Bereich liegt, und in dem Energie zurück zu einer stationären Seite des drahtlosen Energieübertragungssystems übertragen wird, und zwar durch
gleichzeitiges Schließen des ersten Schaltelements (90) und des vierten Schaltelements (96) und Öffnen des zweiten Schaltelements (92) und des dritten Schaltelements (94) während eines negativen Zyklus des Stroms von dem Schwingkreis (26) der mobilen Seite; und durch
gleichzeitiges Schließen des zweiten Schaltelements (92) und des dritten Schaltelements (94) und Öffnen des ersten Schaltelements (90) und des vierten Schaltelements (96) während eines positiven Zyklus des Stroms von dem Schwingkreis (26) der mobilen Seite.

11. Verfahren zum Betrieb eines drahtlosen Energieübertragungssystems nach Anspruch 9 oder 10, umfassend:
einen Schritt (S26, S8) zur Überwachung der Leistungsübertragung an den Schaltkreis (24) der mobilen Seite; und
einen Schritt (S30) zur Unterbrechung der drahtlosen Energieübertragung, wenn eine Änderung der an den Schaltkreis (24) der mobilen Seite übertragenen Energiemenge einen vorbestimmten Schwellenwert überschreitet.

## Revendications

1. Circuit latéral mobile d'un système de transmission d'énergie sans fil, comprenant :
un circuit résonant côté mobile (26) couplé par induction à un circuit résonant côté fixe (18) du système de transmission d'énergie sans fil ;
un redresseur côté mobile (32) adapté pour fonctionner dans un premier mode de fonctionnement, à savoir un mode de redressement en pont complet, pendant le fonctionnement sans défaillance du circuit côté mobile, le redresseur du côté mobile (32) est un redresseur en pont complet ayant un premier élément redresseur (50) et un deuxième élément redresseur (52) connectés en série entre une première borne de sortie (54) et une deuxième borne de sortie (56) du redresseur en pont complet et ayant une borne de connexion commune connectée à une première borne d'entrée (58) du redresseur en pont complet et ayant un troisième élément redresseur (60) et un quatrième élément redresseur (62) connectés en série entre la première borne de sortie (54) et la deuxième borne de sortie (56) du redresseur en pont complet et ayant une borne de connexion commune connectée à une deuxième borne d'entrée (64) du redresseur en pont complet, dans lequel la première borne d'entrée (58) et la deuxième borne d'entrée (64) du redresseur côté mobile (32) sont connectées au circuit résonnant côté mobile (26) ;
un circuit de stockage d'énergie (34) connecté en parallèle aux bornes de sortie du redresseur du côté mobile (32) et adapté pour lisser la sortie du redresseur du côté mobile (32) ;
***caractérisé en ce que***
le redresseur côté mobile (32) comprend un premier élément de commutation (82) connecté en parallèle au premier élément redresseur (50) et un deuxième élément de commutation (84) connecté en parallèle au quatrième élément redresseur (62) ; et
un circuit de commande côté mobile (53) est adapté pour fermer simultanément le premier élément de commutation (82) et le second élément de commutation (84) lors de l'apparition d'un état de défaillance dans le circuit côté mobile (24) pour passer du premier mode de fonctionnement à un second mode de fonctionnement dans lequel une tension continue aux bornes du circuit de stockage d'énergie (34) est commutée vers la première borne d'entrée (58) et la seconde borne d'entrée (64) du redresseur côté mobile (32) sans inversion de polarité et sans court-circuit du circuit résonant côté mobile (26) ; ou
le redresseur côté mobile (32) comprend un troisième élément de commutation (86) connecté en parallèle au deuxième élément redresseur (52) et un quatrième élément de commutation (88) connecté en parallèle au troisième élément redresseur (60) ; et
le circuit de commande du côté mobile (40) est adapté pour fermer ou ouvrir simultanément le troisième élément de commutation (86) et le quatrième élément de commutation (88) lors de l'apparition d'un état de défaillance dans le circuit du côté mobile (24) pour changer le fonctionnement du premier mode de fonctionnement à un troisième mode de fonctionnement où une tension continue à travers le circuit de stockage d'énergie (34) est commutée vers la première borne d'entrée (58) et la deuxième borne d'entrée (64) du redresseur du côté mobile (32) avec inversion de polarité et sans court-circuit du circuit résonnant du côté mobile (26).

2. Circuit du côté mobile d'un système de transmission d'énergie sans fil, comprenant :
un circuit résonant côté mobile (26) couplé par induction à un circuit résonant côté fixe (18) du système de transmission d'énergie sans fil ;
un redresseur côté mobile (32) adapté pour fonctionner dans un premier mode de fonctionnement, à savoir un mode de redressement en pont complet, pendant le fonctionnement sans défaillance du circuit côté mobile, le redresseur du côté mobile (32) est un redresseur en pont complet ayant un premier élément redresseur (50) et un deuxième élément redresseur (52) connectés en série entre une première borne de sortie (54) et une deuxième borne de sortie (56) du redresseur en pont complet et ayant une borne de connexion commune connectée à une première borne d'entrée (58) du redresseur en pont complet et ayant un troisième élément redresseur (60) et un quatrième élément redresseur (62) connectés en série entre la première borne de sortie (54) et la deuxième borne de sortie (56) du redresseur en pont complet et ayant une borne de connexion commune connectée à une deuxième borne d'entrée (64) du redresseur en pont complet, dans lequel les première et deuxième bornes d'entrée (58, 64) du redresseur côté mobile (32) sont connectées au circuit résonnant côté mobile (26) ;
un circuit de stockage d'énergie (34) connecté en parallèle aux bornes de sortie du redresseur du côté mobile (32) et adapté pour lisser la sortie du redresseur du côté mobile (32) ;
***caractérisé par***
un premier élément de commutation (90) connecté en parallèle avec le premier élément redresseur (50) ;
un deuxième élément de commutation (92) connecté en parallèle au deuxième élément redresseur (52) ;
un troisième élément de commutation (94) est connecté en parallèle avec le troisième élément redresseur (60) ; et
un quatrième élément de commutation (96) connecté en parallèle au quatrième élément redresseur (62) ; dans lequel
un circuit de commande côté mobile (40) adapté pour commander les premier à quatrième éléments de commutation (90, 92, 94, 96) pour changer le premier mode de fonctionnement du redresseur côté mobile (32) lors de l'apparition d'un état de défaillance dans le circuit côté mobile (24) en un mode antiphasé dans lequel la tension d'entrée et le courant d'entrée du redresseur côté mobile (32) sont déphasés l'un par rapport à l'autre selon une plage prédéterminée de déphasage et dans lequel l'énergie est transférée en retour vers un côté fixe du système de transmission d'énergie sans fil par
en fermant simultanément le premier élément de commutation (90) et le quatrième élément de commutation (96) et en ouvrant le deuxième élément de commutation (92) et le troisième élément de commutation (94) pendant un cycle négatif du courant provenant du circuit résonant côté mobile (26) ; et
fermer simultanément le deuxième élément de commutation (92) et le troisième élément de commutation (94) et ouvrir le premier élément de commutation (90) et le quatrième élément de commutation (96) pendant un cycle positif du courant provenant du circuit résonant du côté mobile (26).

3. Le circuit du côté mobile selon la revendication 2, dans lequel
le circuit de commande du côté mobile (40) est adapté pour faire passer le deuxième mode de fonctionnement au mode antiphasé de telle sorte qu'une tension d'entrée du redresseur du côté mobile (32) présente un déphasage dans la plage de 180°±30° ou 90°±30° par rapport au courant d'entrée du redresseur du côté mobile (32) pour la transmission inverse de l'énergie du circuit du côté mobile (24) au circuit du côté fixe (12) du système de transmission d'énergie sans fil.

4. Le circuit du côté mobile selon l'une des revendications 1 à 3, comprenant un détecteur du côté mobile (42) adapté pour détecter l'apparition d'un état de défaillance dans le circuit du côté mobile (24), dans lequel le contrôleur du côté mobile (40) est adapté pour ouvrir un commutateur (36) connectant le circuit de stockage d'énergie (36) à une charge du côté mobile (38) lorsque le détecteur du côté mobile (42) détecte l'apparition d'un état de défaillance dans le circuit du côté mobile (24).

5. Le circuit côté mobile selon l'une des revendications 1 à 4, comprenant une interface de communication côté mobile (46) adaptée pour indiquer l'occurrence d'un état de défaillance au niveau du circuit côté mobile (24) au circuit de commande côté fixe (16) du système de transmission d'énergie sans fil.

6. Système de transmission d'énergie sans fil, **caractérisé en ce qu'**il comprend :
au moins un circuit (24) du côté mobile selon l'une des revendications 1 à 5 ;
une unité d'excitation du côté fixe (14) adaptée pour exciter un circuit résonnant du côté fixe (26) pour la transmission d'énergie sans fil vers le au moins un circuit du côté mobile (24) ;
un contrôleur (16) du côté fixe adapté pour
contrôler le fonctionnement de l'unité d'excitation du côté fixe (14),
surveiller la transmission d'énergie vers au moins un circuit latéral mobile (24), et vers
interrompre la transmission d'énergie sans fil lorsqu'une variation de la quantité d'énergie transmise à au moins un circuit latéral mobile (24) dépasse un seuil prédéterminé.

7. Système de transmission d'énergie sans fil selon la revendication 6, dans lequel le circuit de commande côté fixe (16) est adapté pour interrompre la transmission d'énergie sans fil vers le au moins un circuit côté mobile (24) lorsque la quantité d'énergie transmise au circuit côté mobile (24) change de 5 % ou plus.

8. Système de transmission d'énergie sans fil selon la revendication 6 ou 7, comprenant une interface de communication côté fixe (48) adaptée pour recevoir la notification de l'occurrence d'une défaillance au niveau du au moins un circuit côté mobile (24), dans lequel le circuit de commande côté fixe (16) est adapté pour interrompre la transmission d'énergie sans fil lors de la réception de la notification de l'occurrence d'une défaillance au niveau du au moins un circuit côté mobile (24).

9. Procédé de fonctionnement d'un circuit latéral mobile d'un système de transmission d'énergie sans fil selon la revendication 1, le procédé comprenant :
une étape (S14) consistant à faire fonctionner le redresseur du côté mobile (32) dans un premier mode de fonctionnement qui est un mode de redressement en pont complet pendant le fonctionnement sans défaillance du circuit du côté mobile ;
une étape consistant à fermer ou à ouvrir simultanément le premier élément de commutation (82) et le second élément de commutation (84) lors de l'apparition d'un état de défaillance dans le circuit du côté mobile (24) pour changer le mode de fonctionnement en un second mode de fonctionnement dans lequel une tension continue aux bornes du circuit de stockage d'énergie (34) est commutée vers la première borne d'entrée (58) et la seconde borne d'entrée (64) du redresseur du côté mobile (32) sans inversion de polarité et sans court-circuit du circuit résonant du côté mobile (26) ; ou
une étape consistant à fermer ou à ouvrir simultanément le troisième élément de commutation (86) et le quatrième élément de commutation (88) lors de l'apparition d'un état de défaillance dans le circuit du côté mobile (24) pour passer du premier mode de fonctionnement à un troisième mode de fonctionnement dans lequel une tension continue aux bornes du circuit de stockage d'énergie (34) est commutée vers la première borne d'entrée (58) et la deuxième borne d'entrée (64) du redresseur du côté mobile (32) avec inversion de polarité et sans court-circuit du circuit résonant du côté mobile (26).

10. Procédé de fonctionnement d'un circuit du côté mobile d'un système de transmission d'énergie sans fil selon la revendication 2, le procédé comprenant :
une étape (S14) consistant à faire fonctionner le redresseur du côté mobile (32) dans un premier mode de fonctionnement qui est un mode de redressement en pont complet pendant le fonctionnement sans défaillance du circuit du côté mobile ; et
une étape de commande des premier à quatrième éléments de commutation (90, 92, 94, 96) pour changer le premier mode de fonctionnement du redresseur du côté mobile (32) en un mode antiphasé lors de l'apparition d'un état de défaillance dans le circuit du côté mobile (24) où la tension d'entrée et le courant d'entrée du redresseur du côté mobile (32) sont déphasés l'un par rapport à l'autre selon une plage prédéterminée de déphasage et où l'énergie est retransférée vers un côté fixe du système de transmission d'énergie sans fil par
en fermant simultanément le premier élément de commutation (90) et le quatrième élément de commutation (96) et en ouvrant le deuxième élément de commutation (92) et le troisième élément de commutation (94) pendant un cycle négatif du courant provenant du circuit résonant côté mobile (26) ; et
fermer simultanément le deuxième élément de commutation (92) et le troisième élément de commutation (94) et ouvrir le premier élément de commutation (90) et le quatrième élément de commutation (96) pendant un cycle positif du courant provenant du circuit résonant du côté mobile (26).

11. Procédé de fonctionnement d'un système de transmission d'énergie sans fil selon la revendication 9 ou 10, comprenant :
une étape (S26, S8) de surveillance de la transmission d'énergie au circuit du côté mobile (24) ; et
une étape (S30) d'interruption de la transmission d'énergie sans fil lorsqu'une variation de la quantité d'énergie transmise au circuit latéral mobile (24) dépasse un seuil prédéterminé.
